Europäisches Patentamt

European Patent Office

Office européen des brevets

(19)

(11) Publication number: **0 041 309**
**B1**

## (12) EUROPEAN PATENT SPECIFICATION

(45) Date of publication of patent specification: 17.10.84

(21) Application number: 81200617.9

(22) Date of filing: 03.06.81

(51) Int. Cl.³: **C 04 B 11/02, F 26 B 23/02,**
**F 02 C 6/18**

(54) **Method and plant for making gypsum products.**

(30) Priority: 03.06.80 NL 8003237

(43) Date of publication of application:
**09.12.81 Bulletin 81/49**

(45) Publication of the grant of the patent:
**17.10.84 Bulletin 84/42**

(84) Designated Contracting States:
**AT BE DE FR GB SE**

(56) References cited:
**DE-A-2 727 544**
**FR-A-1 540 734**
**FR-A-2 087 074**
**US-A-2 941 790**
**US-A-3 960 101**

**CHEMICAL ABSTRACTS, vol. 89, 1978 page**
**472, abstract 116830n Columbus, Ohio, US**

(73) Proprietor: **Norgips B.V.**
**Oosterhorn 32-34**
**Delfzijl (NL)**

(72) Inventor: **Kappe, Jantinus**
**Westereems 5**
**NL-9642 KP Veendam (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of making gypsum products, which comprises pre-drying and subsequently grinding crude lumps of gypsum, calcining the ground crude gypsum, adding water to the calcined gypsum to produce a material, forming the desired final products from said material, and drying the final products, and also to a plant for carrying out said method.

Such a method and plant are already being used, for example, for the production of gypsum board panels. A disadvantage of the prior technique is that it takes a relatively large amount of energy. Thus the pre-drying and calcining of the crude gypsum and the drying of the final product require large heating installations, which consume substantial amounts of fuel, generally natural gas, while transportation between the various processing stations and the grinding of the crude gypsum lumps need a great deal of electrical power.

It is an object of the present invention to improve a method and plant of the kind described in such a manner that energy requirements are reduced.

It is observed that it is known from French patent 1,540,734 to reduce energy requirements in chemical industries by using the flue gases of a gas turbine, which drives an electrical generator, for heating purposes. Also it is known from Chemical Abstracts Vol. 89 (1978) page 482, abstract 116830 that gypsum may be calcined by using industrial waste gases.

Further German Offenlegungsschrift 2.727.544 discloses the use of flue gases from a desulphurising plant of an electricity works to obtain the heat necessary to calcine gypsum.

Still those publications do not disclose a method by which the heat from the flue gases or industrial waste gases may be put to an optimal use.

According to the invention a method of making gypsum products, which comprises pre-drying and subsequently grinding crude gypsum lumps, calcining the crude gypsum, adding water to the calcined gypsum to produce a material, forming the desired end products from said material and drying said end products, and deriving at least a portion of the heat required for the calcining step from hot waste gases, is characterized in that the hot waste gases are at least partly provided by the flue gases of a gas turbine which drives an electrical generator, wherein the gypsum is calcined at least partly indirectly and the flue gases leaving the calciner are at least partly collected separately from the water vapour released and are supplied to a dryer.

The invention will be described in more detail hereinafter with reference to the accompanying drawings. In said drawings,

Fig. 1 diagrammatically shows a prior plant for the manufacture of gypsum products; and

Fig. 2 diagrammatically shows such a plant according to the present invention.

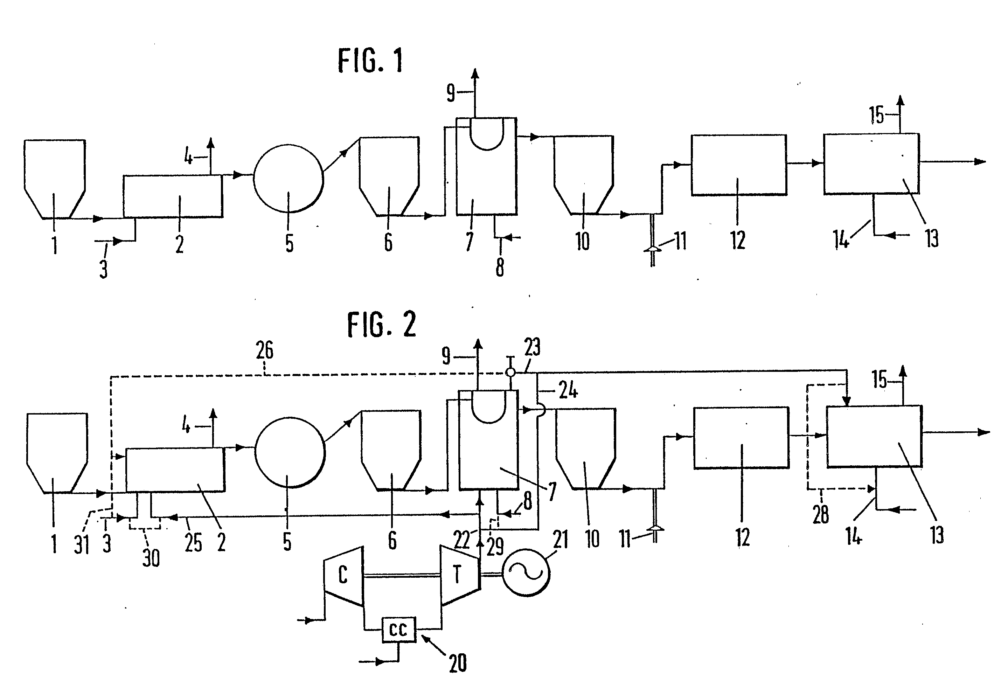

Fig. 1 diagrammatically shows the processing of crude gypsum lumps into a ready final product. A storage space for the crude gypsum lumps is diagrammatically indicated at 1. The crude gypsum lumps are transported from the storage space to a pre-drying installation 2, which is provided for the purpose with gas burners, not shown, to which natural gas or another suitable gas is supplied through a conduit 3. After pre-drying, whereby water vapour and flue gases are released, as indicated by an arrow 4, the dried crude gypsum is transported to a grinder 5, and from the grinder the ground crude gypsum is supplied to an intermediate storage space 6. From storage space 6 the crude gypsum is supplied to a calciner 7. In it the crude gypsum is dried to remove water of crystallization. For this purpose the crude gypsum is heated by means of one or more gas burners, not shown, to which natural gas or another suitable gas is supplied through a conduit 8, whereby water vapour and flue gases are released, as indicated by arrows 9. After calcining, the gypsum is transferred to second intermediate storage space 10, and subsequently, with addition of water as indicated at 11, transported from storage space 10 to an apparatus 12 for forming the final product.

The final product may, for example, consist of gypsum board sheet or other gypsum products. The final product is finally passed through a dryer 13, equipped with gas burners, not shown, to which natural gas or another suitable gas is supplied through a conduit 14. Flue gas and water vapour are released from the dryer at 15. The various transport devices and the grinding device of the plant described above are driven by electric power. The wire and motors required for this are not shown.

Fig. 2 shows a plant largely similar to that of Figure 1, in which corresponding parts are designated by the same reference numerals as in Figure 1.

The plant shown in Figure 2 is distinguished from that of Figure 1 in that a gas turbine 20 has been added, to which natural gas or another suitable gas is supplied. This turbine has a dual purpose. First the flue gases from the turbine can be used to take over, in full or in part, the function of the various gas burners described hereinbefore. Second, the turbine can drive an electrical generator 21, capable of supplying the electrical power required for the plant. In certain cases it is possible to make the plant fully self-supporting as far as electrical power is concerned, that is to say, a connection with the public electricity supply is no longer necessary. In practice, this connection will mostly be maintained, however, in order that breakdown may be taken care of, and in order that a possible excess of electrical energy, which is not needed for the production of the gypsum products, or for the domestic use in appurtenant office accommodation and the like, may be dissipated to the public mains.

The above-described gas conduits and burners are also preferably maintained in order that, if necessary, additional heating may be provided, or heating may be taken over in full, should the gas turbine fail.

As a first step, according to the invention, the flue gases from the gas turbine were supplied through a conduit 22 to the calciner 7. Experiments showed, however, that the flue gases given off by the calciner still had such a calorific value that further use thereof should be possible. This, however, makes it necessary for the flue gases from the calciner to be separated from the water vapour also given off by the calciner. Accordingly, according to the present invention, use is made of an apparatus in which the gypsum is calcined at least in part indirectly, that is to say, that the heating gases, at least a portion thereof, do not come into direct contact with the gypsum. The heat transfer is effected through the walls of the calcining chamber, and if desired through tubes with closed walls extending through the calcining compartment. In this manner the flue gases leaving the calciner can be separately collected for further use. According to the invention, the flue gases leaving the calciner are supplied through piping 23 to the dryer 13 for the final products.

When gas turbine 20 is dimensioned so that generator 21 can meet the requirement of electrical energy, the amount of flue gas is so large that this is not all required for the calcining process. On the other hand, the calorific value of the flue gases leaving the calciner is not sufficient to meet the heat requirements of the dryer for the final products completely, if at least apparatus 12 directly processes all gypsum supplied by the calciner through the intermediate storage space 10. For that reason conduit 22 is provided with a branch conduit 24, which terminates direct in piping 23, so that flue gases with a higher calorific value are supplied to dryer 13.

Furthermore, conduit 22 may be provided with a second branch conduit 25, through which a portion of flue gases from the turbine can be supplied to pre-dryer 2.

Whether in a practical situation, the flue gases from the gas turbine, together with the flue gases passed through the calciner are indeed sufficient to cover the heat requirements of the dryer for the end products and possibly the pre-dryer depends on a number of factors, such as the efficiency of the gas turbine selected, the requirement of electrical power, the efficiency of the calciner, the efficiency of the dryer, etc. If these requirements cannot be fully covered, it will be necessary to provide for additional firing.

It is observed that various variants of the method and plant described are obvious. Thus, for example, the flue gases leaving the calciner may be partially supplied to the pre-dryer, and the balance of these flue gases may be supplied to the dryer for the end products together with flue gases coming direct from the gas turbine. Conduct 25 is then superfluous, but a conduit 26, indicated in dash lines in Figure 2 is required.

Another variant is that in which the gas burners of the dryer 13 and/or of the calciner, and/or of the pre-dryer remain, at least in part, in operation, and in which the oxygen requirements of these burners are fully or partially met by passing flue gases from the gas turbine to the burners concerned. For this purpose one or more of the conduits 28, 29, 30, diagrammatically indicated in dash outline, may be provided. This may result in a considerable saving of blower power needed for the supply and discharge of gases. As an alternative of conduit 30, if conduit 26 to the pre-dryer is provided, the latter may be connected through a conduit 31, indicated by a dash line, to the gas burners for the pre-dryer.

## Claims

1. A method of making gypsum products, which comprises pre-drying and subsequently grinding crude gypsum lumps, calcining the crude gypsum, adding water to the calcined gypsum to produce a material, forming the desired end products from said material and drying said end products, and deriving at least a portion of the heat required for the calcining step from hot waste gases, characterized in that the hot waste gases are at least partly provided by the flue gases of a gas turbine which drives an electrical generator, wherein the gypsum is calcined at least partly indirectly and the flue gases leaving the calciner are at least partly collected separately from the water vapour released and are supplied to a dryer.

2. A method as claimed in claim 1, wherein at least a portion of the flue gases leaving the calciner, with a portion of the flue gases coming direct from the gas turbine, are used for drying the end products.

3. A method as claimed in claim 1 or 2, wherein a portion of the flue gases leaving the calciner is used for the pre-drying step.

4. A method as claimed in claim 1 or 2, wherein a portion of the flue gases coming direct from the gas turbine is used for the pre-drying step.

5. A method as claimed in any one of the preceding claims, which comprises using gas burners for providing at least a portion of the heat required for drying the end product, characterized in that the oxygen requirements of the gas burners are at least partially met by supplying at least a portion of the flue gases from the gas turbine direct and/or by way of the calciner to the gas burners.

6. A method as claimed in any one of the preceding claims, which comprises using gas burners for providing at least a portion of the heat required for the calcining step, characterized in that the oxygen requirements of these gas burners are at least partially met by passing at least a portion of the flue gases from the gas turbine to said burners.

7. A method as claimed in any one of the preceding claims, which comprises using gas burners for providing at least a portion of the heat required for the pre-drying step, characterized in that the oxygen requirements of these gas burners are at least partially met by passing at least a portion of the flue gases from the gas turbine direct and/or by way of the calciner to these gas burners.

8. A plant for making gypsum products, comprising a pre-dryer (2), a grinder (5), a calciner (7), and apparatus (12) for making the final product, and piping (22) for passing hot waste gases to the calciner, characterized by a gas turbine (20) driving an electrical generator (21), the flue gases of the gas turbine being at least partly fed by said piping to the calciner (7), which is at least partially of the indirect type, wherein the flue gases leaving the calciner are supplied at least partially through a conduit (23) to a first branch piping (24) terminating in a dryer (13) for the end product and/or at least partly through a conduit (26) terminating in the pre-dryer (2).

9. A plant as claimed in claim 8, wherein said piping comprises second branch piping (25) terminating in the predryer.

Revendications

1. Procédé pour la fabrication de produits à base de plâtre qui comprend le préséchage et le broyage ultérieur de morceaux de gypse brut, la calcination du gypse brut, l'addition d'eau au gypse calciné pour l'obtention d'une matière, la formation des produits finis désirés à partir de cette matière et le séchage des produits finis, et la dérivation à partir de gaz chauds perdus d'une fraction au moins de la chaleur nécessaire à l'opération de calcination, caractérisé en ce que les gaz chauds perdus sont constitués au moins en partie par les gaz d'échappement d'une turbine à gaz qui entraîne un générateur électrique, le gypse est calciné au moins en partie de manière indirecte et les gaz d'échappement quittant l'appareil de calcination sont recueillis au moins en partie séparément de la vapeur d'eau libérée et sont fournis à un séchoir.

2. Procédé selon la revendication 1 caractérisé en ce qu'une fraction au moins des gaz d'échappement quittant l'appareil à calciner est utilisée, avec une fraction des gaz d'échappement venant directement de la turbine à gaz, pour le séchage des produits finis.

3. Procédé selon les revendications 1 ou 2 caractérisé en ce qu'une fraction des gaz d'échappement quittant l'appareil à calciner est utilisée dans l'opération de préséchage.

4. Procédé selon les revendications 1 ou 2 caractérisé en ce qu'une fraction des gaz d'échappement venant directement de la turbine à gaz est utilisée dans l'opération de préséchage.

5. Procédé selon l'une quelconque des revendications 1 à 4 comprenant l'emploi de brûleurs à gaz pour produire au moins une fraction de la chaleur nécessaire au séchage des produits finis, caractérisé en ce que les besoins en oxygène des brûleurs à gaz sont satisfaits au moins partiellement par la fourniture à ces brûleurs à gaz d'une fraction au moins des gaz d'échappement venant directement de la turbine à gaz et/ou par l'intermédiaire de l'appareil à calciner.

6. Procédé selon l'une quelconque des revendications 1 à 5 comprenant l'emploi de brûleurs à gaz pour la production d'une fraction au moins de la chaleur nécessaire à l'opération de calcination, caractérisé en ce que les besoins en oxygène de ces brûleurs à gaz sont satisfaits au moins partiellement par le passage à travers ces brûleurs d'une fraction au moins des gaz d'échappement venant de la turbine à gaz.

7. Procédé selon l'une quelconque des revendications 1 à 6 comprenant l'emploi de brûleurs à gaz pour la production d'une fraction au moins de la chaleur nécessaire à l'opération de préséchage, caractérisé en ce que les besoins en oxygène de ces brûleurs à gaz sont satisfaits au moins en partie par le passage à travers ces brûleurs d'une fraction au moins des gaz d'échappement venant directement de la turbine à gaz et/ou venant par l'intermédiaire de l'appareil à calciner.

8. Installation pour la fabrication de produits à base de plâtre, comprenant un préséchoir (2), un broyeur (5), un appareil à calciner (7), un appareil (12) pour la fabrication des produits finis, des canalisations (22) pour faire passer des gaz chauds perdus à travers l'appareil à calciner, caractérisé en ce qu'elle comprend une turbine à gaz (20) entraînant un generateur electrique (21), les gaz d'échappement de la turbine à gaz étant fournis au moins en partie par les canalisations à l'appareil à calciner (7) qui est au moins partiellement du type à action indirecte, les gaz d'échappement quittant l'appareil à calciner étant fournis au moins en partie à travers un conduit (23) à une première branche (24) d'une canalisation se terminant dans un séchoir (13) des produits finis et/ou au moins en partie à travers un conduit (26) se terminant dans le préséchoir (2).

9. Installation selon la revendication 8 caractérisée en ce que les canalisations comprennent une seconde branche (25) de canalisation se terminant dans le préséchoir.

Patentansprüche

1. Verfahren zur Herstellung von Gipsprodukten, wobei rohe Gipsbrocken vorgetrocknet und nachfolgend vermahlen werden, der rohe Gips calciniert wird, Wasser dem calcinierten Gips zugesetzt wird, um ein Material zu erzeugen, die gewünschten Endprodukte aus dem Material gebildet werden und die Endprodukte getrocknet werden, und zumindest ein Teil der für den Calcinierungsschritt benötigten Wärme aus heißen Abfallgasen gewonnen wird, dadurch gekennzeichnet, daß die heißen Abfallgase zumindest teilweise durch die Abgase einer Gasturbine, die einen elektrischen Generator antreibt, zur Verfügung gestellt werden, worin der Gips zumindest teilweise indirekt calciniert wird und die Abgase, die den Röstofen verlassen, zumindest teilweise aus dem freigesetzten Wasserdampf getrennt gesammelt und in einen Trockner eingeführt werden.

2. Verfahren nach Anspruch 1, worin zumindest ein Teil der Abgase, die den Röstofen verlassen, mit einem Teil der Abgase, die direkt von der Gasturbine kommen, zur Trocknung der Endprodukte verwendet werden.

3. Verfahren nach Anspruch 1 oder Anspruch 2, worin ein Teil der Abgase, die den Röstofen verlassen, für den Vortrocknungsschritt verwendet wird.

4. Verfahren nach Anspruch 1 oder Anspruch 2, worin ein Teil der Abgase, die direkt aus der Gasturbine kommen, für den Vortrocknungsschritt eingesetzt wird.

5. Verfahren nach einem der voranstehenden Ansprüche, wobei Gasbrenner verwendet werden, um zumindest einen Teil der zum Trocknen des Endprodukts benötigten Wärme zur Verfügung zu stellen, dadurch gekennzeichnet, daß der Sauerstoff- Bedarf der Gasbrenner zumindest teilweise erfüllt wird, indem zumindest ein Teil der Abgase aus der Gasturbine direkt und/oder mittels des Röstofens den Gasbrennern zugeführt wird.

6. Verfahren nach einem der voranstehenden Ansprüche, wobei Gasbrenner verwendet werden, um zumindest einen Teil der Wärme für den Calcinierungsschritt zur Verfügung zu stellen, dadurch gekennzeichnet, daß der Sauerstoff-Bedarf dieser Gasbrenner zumindest teilweise erfüllt wird, indem zumindest ein Teil der Abgase aus der Gasturbine den Brennern zugeführt wird.

7. Verfahren nach einem der voranstehenden Ansprüche, wobei Gasbrenner verwendet werden, um zumindest einen Teil der für den Vortrocknungsschritt erforderlichen Wärme zur Verfügung zu stellen, dadurch gekennzeichnet, daß der Sauerstoff- Bedarf dieser Gasbrenner zumindest teilweise erfüllt wird, indem zumindest ein Teil der Abgase von der Gasturbine und/oder über den Röstofen den Gasbrennern zugeführt wird.

8. Anlage zur Herstellung von Gipsprodukten, umfassend einen Vortrockner (2), eine Mühle (5), einen Röstofen (7) und eine Vorrichtung (12) zur Herstellung des Endproduktes, und eine Rohranlage (22) zur Leitung heißer Abfallgase zum Röstofen, dadurch gekennzeichnet, daß eine Gasturbine (20), die einen elektrischen Generator (21) antreibt, wobei die Abfallgase der Gasturbine zumindest teilweise durch die Rohranlage dem Röstofen (7) zugeführt werden, der zumindest teilweise zum indirekten Typ gehört, worin die Abfallgase, die den Röstofen verlassen, zumindest teilweise durch eine Leitung (23) zu einer ersten Verzweigungsleitung (24) geführt werden, die in einem Trockner (13) für das Endprodukt endet, und/oder zumindest teilweise durch eine Leitung (26), die in dem Vortrockner (2) endet, geführt werden.

9. Anlage nach Anspruch 8, worin die Rohranlage eine zweite Verzweigungsleitung (25) umfaßt, die in dem Vortrockner endet.

FIG. 1

FIG. 2